# EUROPEAN PATENT APPLICATION

(11) **EP 3 476 641 A1**
(43) Date of publication of application: **01.05.2019**
(21) Application number: 18194777.1
(22) Date of filing: 17.09.2018
(51) Int. Cl.: B60K 15/063

(54) **STRUCTURE FOR MOUNTING A FUEL TANK TO A VEHICLE**

(30) Priority: 25.10.2017 JP 2017205974
(71) Applicant: TOYOTA JIDOSHA KABUSHIKI KAISHA, Toyota-shi, Aichi-ken, 471-8571 (JP)
(72) Inventor: AMANO, Shinsuke, Toyota-shi, Aichi-ken, 471-8571 (JP); ASAHARA, Toshiaki, Toyota-shi, Aichi-ken, 471-8510 (JP)
(74) Representative: Kuhnen & Wacker Patent- und Rechtsanwaltsbüro PartG mbB

(57) **Abstract**

A structure for mounting a fuel tank to a vehicle, the structure includes: a fuel tank having a fuel tank body and a strut that interconnects, inside the fuel tank, a bottom wall and an upper wall of the fuel tank body; a tank band disposed at a lower side of the fuel tank and supporting the fuel tank; and a reinforcement member disposed at the lower side of the fuel tank. The strut is attached to the bottom wall at a strut attachment portion formed at the bottom wall, and at least one of the tank band and the reinforcement member is positioned at a vehicle lower side of the strut attachment portion and the at least one of the tank band and the reinforcement member overlaps at least part of the strut attachment portion.

## Description

### BACKGROUND

### Technical Field

The present disclosure relates to a structure for mounting a fuel tank to a vehicle.

### Related Art

Saddle fuel tanks provided, for example, at a vehicle lower side of a floor panel and disposed so as to straddle an exhaust pipe are used as fuel tanks. A saddle fuel tank has a pair of storage portions, which are provided on the right and left sides of the exhaust pipe, and a coupling portion, which is disposed on an upper portion of the exhaust pipe and intercouples (interconnects) the pair of storage portions (e.g., see Japanese Utility Model Application Laid-open (JP-U) No. H3-88829).

In a case where a saddle fuel tank is molded of resin, the fuel tank has a flat shape, so there has been the concern that an upper wall and a bottom wall of the fuel tank will become greatly deformed by, for example, changes in an internal pressure of the tank. In order to restrain such deformation, it is conceivable, for example, to dispose struts between the upper wall and the bottom wall of the fuel tank.

A saddle fuel tank is disposed at the vehicle lower side of the floor panel. Furthermore, braces that intercouple tank bands and/or cross members are disposed at the vehicle lower side of the fuel tank.

### SUMMARY

In this regard, because the fuel tank is disposed at the vehicle lower side of the floor panel of the vehicle, there is the concern that a fuel tank made of resin will directly interfere with, for example, raised portions of the road surface and/or rocks on the road surface. Furthermore, if a strut attachment portion of the bottom wall of the fuel tank interferes with the road surface, there is the concern that loads from the road surface will directly act on the strut, resulting in the strut secured to the bottom wall and the upper wall of the fuel tank sustaining damage.

In consideration of the circumstances described above, the present disclosure provides a structure for mounting a fuel tank to a vehicle where, a fuel tank is made of resin and is provided with a strut that interconnects an upper wall and a bottom wall of the fuel tank, the input of loads from a road surface to a strut attachment portion of the bottom wall is restrained.

A structure for mounting a fuel tank to a vehicle of a first aspect of the disclosure includes a fuel tank, a tank band, and a reinforcement member. The fuel tank has a fuel tank body that is enclosed by a bottom wall, side walls, and an upper wall, and a strut that interconnects, inside the fuel tank, the bottom wall and the upper wall. The tank band is disposed at a lower side of the fuel tank and supports the fuel tank. The reinforcement member is disposed at the lower side of the fuel tank. The strut is attached to the bottom wall at a strut attachment portion formed at the bottom wall, and at least one of the tank band and the reinforcement member is positioned at a vehicle lower side of the strut attachment portion and the at least one of the tank band and the reinforcement member overlaps at least part of the strut attachment portion.

In the structure for mounting a fuel tank to a vehicle formed in this way, at least one of the tank band and the reinforcement member is positioned at the vehicle lower side of the strut attachment portion and the at least one of the tank band and the reinforcement member overlaps at least part of the strut attachment portion. That is, at least part of the strut attachment portion of the bottom wall of the fuel tank body is covered by the tank band or the reinforcement member as seen from the vehicle lower side. Consequently, if the bottom portion of the vehicle interferes with a road surface, loads are prevented or restrained from being directly input from the road surface to the strut attachment portion of the bottom wall of the fuel tank body.

A structure for mounting a fuel tank to a vehicle of a second aspect of the disclosure is the structure for mounting a fuel tank to a vehicle of the first aspect, wherein the strut attachment portion is formed projecting in a vehicle upward direction at the bottom wall.

In the structure for mounting a fuel tank to a vehicle formed in this way, the strut attachment portion of the bottom wall is formed projecting in the vehicle upward direction at the bottom wall. Consequently, the strut attachment portion is spaced a predetermined distance apart from the tank band or the reinforcement member in the vehicle upward- downward directions. Consequently, if the vehicle interferes with the road surface, loads that are input from the road surface to the strut attachment portion of the bottom wall can be restrained even more.

A structure for mounting a fuel tank to a vehicle of a third aspect of the disclosure is the structure for mounting a fuel tank to a vehicle of the first aspect or the second aspect, wherein the fuel tank body has a first storage portion, a second storage portion, and a coupling portion that communicates the first storage portion and the second storage portion to each other. The coupling portion straddles an exhaust pipe that is disposed at a vehicle lower side of the coupling portion and extends in a vehicle front-rear direction. The strut is formed at at least one of the first storage portion and the second storage portion.

In the structure for mounting a fuel tank to a vehicle formed in this way, the fuel tank is a saddle fuel tank. The coupling portion straddles the exhaust pipe of the vehicle, so only the first storage portion and the second storage portion are exposed to the vehicle lower side. In a case where the strut is provided at at least one of the first storage portion and the second storage portion, the tank band or the reinforcement member is disposed at the vehicle lower side of the strut attachment portion of the bottom wall, so if the vehicle interferes with the road surface, loads are prevented or restrained from being directly input from the road surface to the strut attachment portion of the bottom wall.

A structure for mounting a fuel tank to a vehicle of a fourth aspect of the disclosure is the structure for mounting a fuel tank to a vehicle of the third aspect, wherein plural struts are formed at the first storage portion and at the second storage portion, the plural struts in the first storage portion are formed out of alignment with each other in the vehicle front-rear direction and out of alignment with each other in a vehicle width direction, and the plural struts in the second storage portion are formed out of alignment with each other in the vehicle front- rear direction and out of alignment with each other in the vehicle width direction.

In the structure for mounting a fuel tank to a vehicle of the fourth aspect of the disclosure, the plural struts, that are disposed at the first storage portion and at the second storage portion of the fuel tank, are formed out of alignment with each other in the vehicle front-rear direction and in the vehicle width direction, so the tank band or the reinforcement member can be disposed at the vehicle lower sides of all the struts. Because of this, the struts are prevented or restrained from sustaining damage due to the direct input of loads from the road surface, and overall the fuel tank is prevented or restrained from sustaining damage.

A structure for mounting a fuel tank to a vehicle of a fifth aspect of the disclosure is the structure for mounting a fuel tank to a vehicle of the first aspect, wherein the strut attachment portion and the tank band are separated from each other in a vehicle up-down direction, and the strut attachment portion and the reinforcement member are separated from each other in the vehicle up-down direction.

In the structure for mounting a fuel tank to a vehicle of the fourth aspect of the disclosure, since the strut attachment portion and the tank band are separated from each other in the vehicle up- down direction, and the strut attachment portion and the reinforcement member are separated from each other in a vehicle up-down direction, if the bottom portion of the vehicle interferes with a road surface, loads are even more effectively prevented or restrained from being directly input from the road surface to the strut attachment portion.

The structure for mounting a fuel tank to a vehicle pertaining to the first aspect to the fourth aspect of the disclosure is configured as described above, so when the vehicle interferes with the road surface, loads are prevented or restrained from being input from the road surface to the strut attachment portion of the bottom wall of the fuel tank body.

### BRIEF DESCRIPTION OF THE DRAWINGS

FIG. 1 is a sectional view, along line A-A of FIG. 2, showing a fuel tank pertaining to an embodiment;
FIG. 2 is a top view of the fuel tank pertaining to the embodiment;
FIG. 3 is a sectional view along line B-B of FIG. 2;
FIG. 4 is a vehicle bottom view showing a structure for mounting the fuel tank to a vehicle pertaining to the embodiment; and
FIG. 5 is a view schematically showing a cross section along line C-C of FIG. 2.

### DETAILED DESCRIPTION

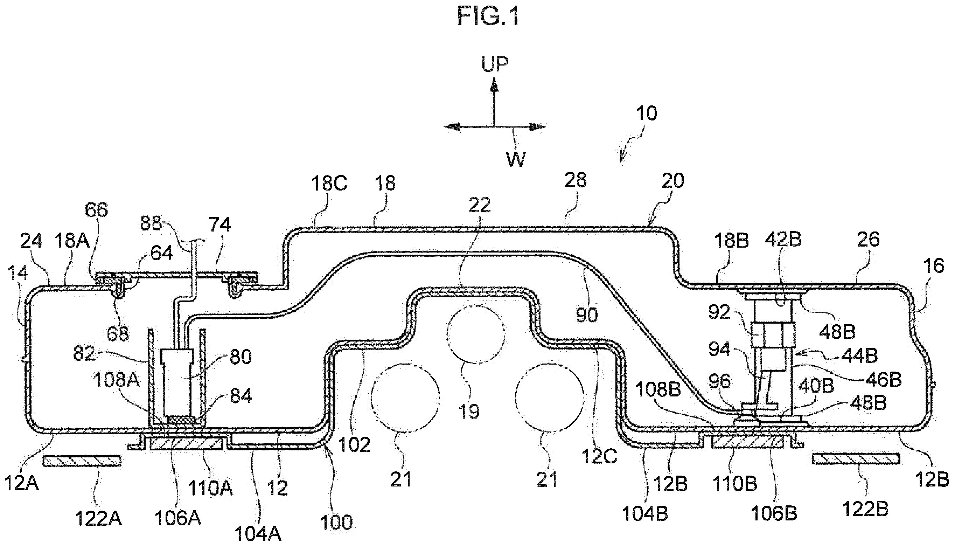

A structure for mounting a fuel tank to a vehicle pertaining to an embodiment of the disclosure will be described with reference to FIG. 1 to FIG. 5. In connection with the following description, arrow FR in the drawings indicates a vehicle forward direction, arrow UP in the drawings indicates a vehicle upward direction, and arrow W in the drawings indicates a vehicle width direction.

### [Configuration]

First, the entirety of a fuel tank 10 will be described with reference to FIG. 1. The fuel tank 10 has a fuel tank body 20 equipped with a bottom wall 12 that extends in the vehicle width direction, a left wall 14 and a right wall 16 that extend in the vehicle upward direction from both vehicle width direction end portions of the bottom wall 12, and an upper wall 18 that joins the upper ends of the left wall 14 and the right wall 16 to each other and extends in the vehicle width direction. The fuel tank body 20 is closed off by the bottom wall 12, the side walls including the left wall 14 and the right wall 16, and the upper wall 18 and can store fuel inside.

The bottom wall 12 has a raised portion 22 where the vehicle width direction central portion of the bottom wall 12 projects in the vehicle upward direction in order to avoid a drive shaft 19 and exhaust pipes 21 of the vehicle. That is, the fuel tank 10 is a saddle fuel tank. Furthermore, the fuel tank 10 is a resin fuel tank molded from resin.

The inside of the fuel tank body 20 is divided into a first storage portion 24 that is positioned on the vehicle width direction left side of the raised portion 22, a second storage portion 26 that is positioned on the vehicle width direction right side of the raised portion 22, and a coupling portion 28 that intercouples the first storage portion 24 and the second storage portion 26.

The sections of the bottom wall 12 and the upper wall 18 that configure the first storage portion 24 will be called a first bottom wall portion 12A and a first upper wall portion 18A, respectively. The sections of the bottom wall 12 and the upper 18 that configure the second storage portion 26 will be called a second bottom wall portion 12B and a second upper wall portion 18B, respectively. The sections of the bottom wall 12 and the upper wall 18 that configure the coupling portion 28 will be called a third bottom wall portion 12C and a third upper wall portion 18C, respectively.

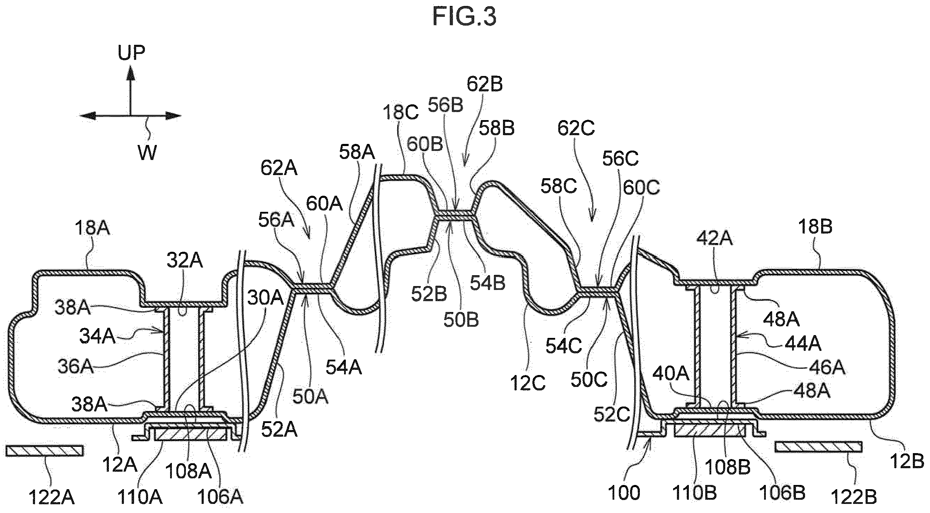

At the first bottom wall portion 12A, as shown in FIG. 3, a circular truncated cone-shaped attachment portion 30A that projects in the vehicle upward direction locally is formed. Furthermore, at the first upper wall portion 18A, an attachment portion 32A that projects in the vehicle downward direction is formed at a position corresponding to the attachment portion 30A. A strut 34A that extends in the vehicle upward- downward directions is disposed between the attachment portions 30A and 32A.

The strut 34A has a strut body 36A that is substantially cylindrical in shape and flange portions 38A that are formed projecting outward in a radial direction at both end portions of the strut body 36A. The flange portions 38A are joined to the attachment portions 30A and 32A.

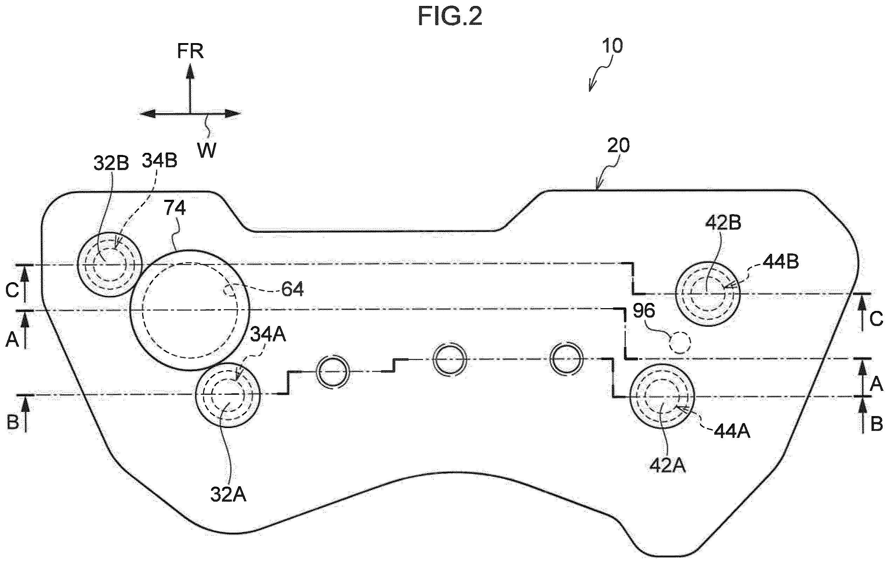

As shown in FIG. 2, in the first storage portion 24, as seen in a plan view, the strut 34A is disposed at a vehicle rear side and a strut 34B is disposed at a vehicle front side, with a later-described attachment hole portion 64 being sandwiched between them.

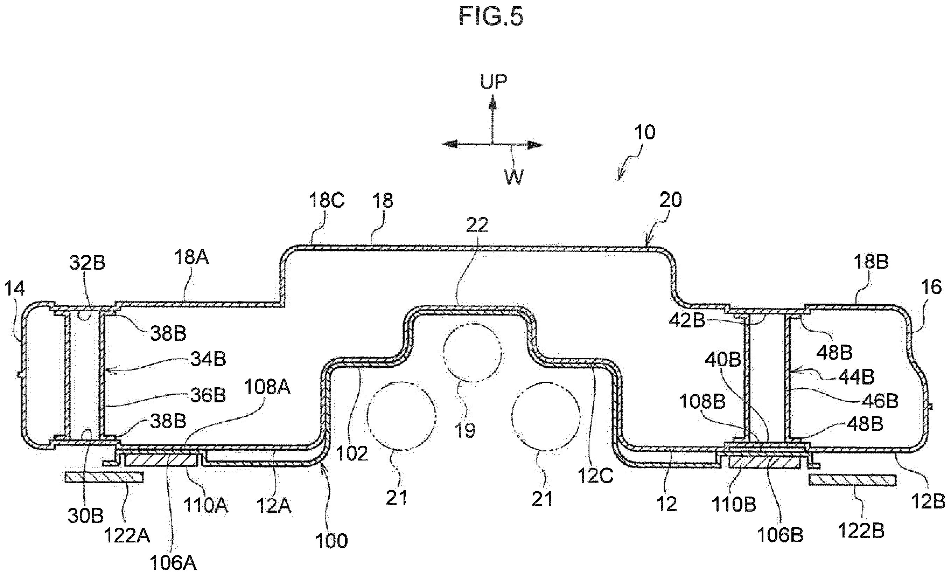

The strut 34B, as shown in FIG. 5, has the same configuration as the strut 34A, and constituent elements of the strut 34B that are the same as those of the strut 34A are assigned reference numbers identical to those of the strut 34A but with a "B" at the end rather than an "A", and detailed description of those same constituent elements will be omitted.

As shown in FIG. 1 to FIG. 3, as in the first storage portion 24, a pair of struts 44A and 44B that extend in the vehicle upward-downward directions are also disposed between the second bottom wall portion 12B and the second upper wall portion 18B in the second storage portion 26.

That is, at the second bottom wall portion 12B, as shown in FIG. 3, a circular truncated cone-shaped attachment portion 40A that projects in the vehicle upward direction locally is formed. Furthermore, at the second upper wall portion 18B, an attachment portion 42A that projects in the vehicle downward direction is formed at a position corresponding to the attachment portion 40A. The strut 44A is disposed between the attachment portions 40A and 42A.

The strut 44A, as shown in FIG. 3, like the strut 34A, has a strut body 46A that is substantially cylindrical in shape and flange portions 48A that are formed projecting outward in a radial direction at both end portions of the strut body 46A. The flange portions 48A are joined to the attachment portions 40A and 42A.

The strut 44B, as shown in FIG. 5, has the same configuration as the strut 44A, and constituent elements of the strut 44B that are the same as those of the strut 44A are assigned reference numbers identical to those of the strut 44A but with a "B" at the end rather than an "A", and detailed description of those same constituent elements will be omitted.

Moreover, as shown in FIG. 3, at the third bottom wall portion 12C of the coupling portion 28, circular truncated cone-shaped projecting portions 50A to 50C that project in the vehicle upward direction are formed in three places. The projecting portions 50A to 50C have inclined surfaces 52A to 52C and upper end surfaces 54A to 54C that configure the substantially circular truncated cone shapes.

Furthermore, at the third upper wall portion 18C, as shown in FIG. 2 and FIG. 3, circular truncated cone-shaped projecting portions 56A to 56C that project in the vehicle downward direction are formed in three places. The projecting portions 56A to 56C have inclined surfaces 58A to 58C and lower end surfaces 60A to 60C that configure the substantially circular truncated cone shapes.

The upper end surfaces 54A to 54C of the projecting portions 50A to 50C and the lower end surfaces 60A to 60C of the projecting portions 56A to 56C are joined to each other to form standoffs 62A to 62C. That is, in the coupling portion 28, three standoffs 62A to 62C are formed a predetermined interval apart from each other in the vehicle width direction.

Furthermore, as shown in FIG. 1, at the first upper wall portion 18A of the first storage portion 24, an attachment hole portion 64 for attaching built-in parts of the fuel tank 10 to the inside of the fuel tank body 20 is formed.

The attachment hole portion 64, which is an open portion, is formed a little on the vehicle front side of the center of the first upper wall portion 18A. As shown in FIG. 1, the attachment hole portion 64 has a cylindrical support portion 68, which configures part of the first upper wall portion 18A, and an insert ring 66, which is made of metal and is insert-molded in the support portion 68. A cover 74 is placed on top of the insert ring 66 and fastened thereto using metal fittings (not shown in the drawings), whereby the attachment hole portion 64 is closed off.

Moreover, at the vehicle lower side of the cover 74 that closes off the attachment hole portion 64, as shown in FIG. 1, a pump module 80 is disposed.

As shown in FIG. 1, on top of the bottom wall 12 (the first bottom wall portion 12A) at the vehicle lower side of the cover 74, a secondary cup 82 is disposed such that a liquid level of the fuel can be maintained at a high level around a filter 84, later-described, in a case in which a remaining quantity of the fuel has gone down. Inside the secondary cup 82, the filter 84 and the pump module 80 are disposed. The pump module 80 is disposed at a vehicle upper side of the filter 84 and includes a fuel pump for supplying fuel from the fuel tank body 20 to an engine. A fuel supply line 88 that extends in the vehicle upward direction from the pump module 80 extends through the cover 74 to an outside of the fuel tank body 20.

Furthermore, inside the secondary cup 82, a jet pump (not shown in the drawings) that causes fuel to move from the second storage portion 26 to the first storage portion 24 via a later-mentioned fuel line 90 is disposed.

In the second storage portion 26, as shown in FIG. 1, a bracket 92 is attached to the strut 44B positioned at the vehicle front side. A filter 96 is disposed on a distal end of an arm 94 that extends from the bracket 92 toward the bottom wall portion 12B. One end of a fuel line 90, which supplies fuel from the second storage portion 26 to the inside of the secondary cup 82 of the first storage portion 24, is connected to the filter 96.

Next, the structure for mounting the fuel tank 10 to the vehicle will be described.

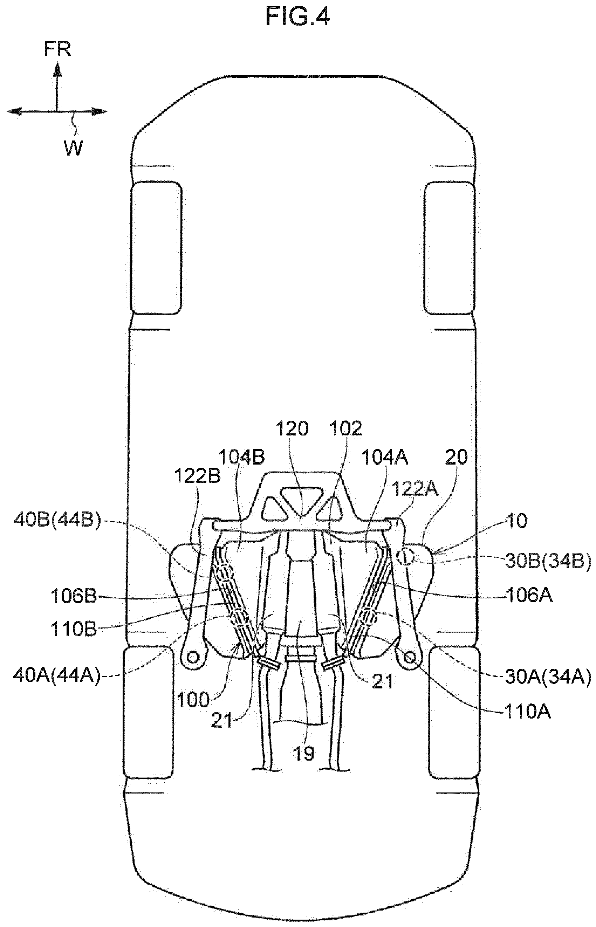

At the vehicle lower side of the bottom wall 12 of the fuel tank 10, as shown in FIG. 1, a heat insulator 100 is disposed. The heat insulator 100, as shown in FIG. 4, has substantially the same shape as the bottom wall 12 of the fuel tank 10 and covers the fuel tank 10 from the vehicle lower side. It will be noted that, as shown in FIG. 4, although the heat insulator 100 does not cover both vehicle width direction end portions of the fuel tank 10, the rest has the same shape as the bottom wall 12 of the fuel tank 10, which is a trapezoidal shape whose vehicle front side is wider in width as seen from the vehicle lower side.

Furthermore, the heat insulator 100 is equipped with a raised portion 102 and flange portions 104A and 104B. The raised portion 102 is formed in the same shape as the third bottom wall portion 12C of the fuel tank body 20 as seen from the vehicle front-rear direction and is disposed along (in abutting contact with) the third bottom wall portion 12C. The flange portions 104A and 104B extend outward in the vehicle width direction from both vehicle width direction end portions of the raised portion 102.

The flange portion 140A is disposed at a vehicle lower side with a predetermined distance away from the first bottom wall portion 12A. In a neighborhood of an outer end portion, in the vehicle width direction, of the flange portion 104A, a channel portion 106A, for receiving a later-described tank band 110A, extends in the vehicle front-rear direction along the vehicle width direction outer end portion. The channel portion 106A, as shown in FIG. 4, is formed inclining inward in the vehicle width direction heading from the vehicle front side toward the vehicle rear side. Furthermore, the channel portion 106A, as shown in FIG. 1, is formed projecting in a cross-sectional hat shape in the vehicle upward direction from the flange portion 104A. An upper surface 108A of the channel portion 106A is in abutting contact with the first bottom wall portion 12A.

A tank band 110A is wound at (inserted into) the channel portion 106A from the vehicle lower side, whereby the fuel tank 10 is supported from the vehicle lower side.

As shown in FIG. 3 to FIG. 5, the attachment portion 30A (the strut 34A) of the fuel tank 10 is configured to be positioned on the vehicle upper side of the channel portion 106A of the heat insulator 100. That is, as shown in FIG. 3, the channel portion 106A of the heat insulator 100 and the tank band 110A are disposed at the vehicle lower side of the attachment portion 30A of the first bottom wall portion 12A of the fuel tank body 20. Furthermore, because the attachment portion 30A is formed projecting in a circular truncated cone shape in the vehicle upward direction locally from the first bottom wall portion 12A, the attachment portion 30A is spaced a predetermined distance away from the upper surface 108A of the channel portion 106A of the heat insulator 100, so that a space is formed between the attachment portion 30A and the upper surface 108A.

The flange portion 104B has substantially the same configuration as the flange portion 104A, so constituent elements of the flange portion 104B that are the same as those of the flange portion 104A are assigned reference numbers identical to those of the flange portion 104A but with a "B" at the end rather than an "A", and detailed description of those same constituent elements will be omitted. However, at the flange portion 104B, the attachment portions 40A and 40B (the struts 44A and 44B) are positioned on the upper portion of the channel portion 106B.

Furthermore, on the vehicle lower surface, as shown in FIG. 4, braces 122A and 122B are disposed at the vehicle lower side of the fuel tank 10. The braces 122A and 122B connect both end portions of a cross member 120 located further at the vehicle forward direction from the fuel tank 10 to a cross member (not shown in the drawings) located further at the vehicle rearward direction from the fuel tank 10. The brace 122A is positioned further outward in the vehicle width direction from the tank band 110A and extends inclining outward in the vehicle width direction heading in the vehicle rearward direction as seen from the vehicle lower side.

As shown in FIG. 4, the brace 122B is disposed in substantially bilateral symmetry with the brace 122A, but the attachment portion 30B (the strut 34B) is disposed at the vehicle upper side of the brace 122B. That is, as shown in FIG. 5, the attachment portion 30B is formed at the second bottom wall portion 12B positioned over the brace 122B, and the strut 34B is connected to the vehicle upper side of the attachment portion 30B.

Next, the action of the fuel tank 10 will be described.

As shown in FIG. 3, the tank bands 110A and 110B made of metal and the braces 122A and 122B made of metal are disposed at the vehicle lower side of the fuel tank 10.

Consequently, even if the bottom portion of the vehicle and the road surface interfere with each other because of, for example, raised portions in the road surface or rocks on the road surface, the tank bands 110A and 110B made of metal or the brace 122A made of metal interfere with the road surface so that the bottom wall 12 (the first bottom wall portion 12A and the second bottom wall portion 12B) of the fuel tank 10 made of resin is prevented or restrained from directly interfering with the road surface.

In particular, the tank band 110A is disposed on the vehicle lower side of the attachment portion 30A (the strut 34A) of the first bottom wall portion 12A, and the tank band 110B is disposed on the vehicle lower side of the attachment portions 40A and 40B (the struts 44A and 44B) of the second bottom wall portion 12B. Moreover, the brace 122A is disposed on the vehicle lower side of the attachment portion 30B (the strut 34B) of the first bottom wall portion 12A.

Consequently, the attachment portions 30A and 30B of the first bottom wall portion 12A and the attachment portions 40A and 40B of the second bottom wall portion 12B are prevented from directly interfering with the road surface, and loads are prevented or restrained from being directly input from the road surface via the attachment portions 30A, 30B, 40A, and 40B (hereinafter called "the attachment portions 30A to 40B") to the struts 34A, 34B, 44A, and 44B (hereinafter called "the struts 34A to 44B"). That is, the struts 34A to 44B secured to the upper wall 18 and the bottom wall 12 are prevented or restrained from sustaining damage by the direct input of loads from the road surface.

Furthermore, as shown in FIG. 3, the attachment portions 30A and 40A are formed projecting in substantially circular truncated cone shapes in the vehicle upward direction locally from the first bottom wall portion 12A and the second bottom wall portion 12B, so they are spaced apart from the upper surfaces 108A and 108B of the channel portions 106A and 106B of the heat insulator 100 that are in abutting contact with the vehicle lower sides of the first bottom wall portion 12A and the second bottom wall portion 12B. That is, the upper surfaces 108A and 108B and the attachment portions 30A, 40A, and 40B are spaced apart from each other, so loads that have been directly input from the road surface to the tank bands 110A and 110B are prevented or restrained from being directly transmitted via the attachment portions 30A, 40A, and 40B to the struts 34A, 44A, and 44B. Consequently, damage to the fuel tank 10 is prevented or restrained.

Similarly, the brace 122A is spaced apart from the attachment portion 30B of the strut 34B at the first bottom wall portion 12A. That is, the brace 122A and the attachment portion 30B are spaced apart from each other, so loads that have been directly input from the road surface to the brace 122A are not directly transmitted via the attachment portion 30B to the strut 34B. Consequently, damage to the fuel tank 10 is prevented or restrained.

Furthermore, the tank bands 110A and 110B or the brace 122A are disposed at the vehicle lower sides of all the struts 34A to 44B disposed inside the fuel tank 10-in other words, the attachment portions 30A to 40B that are strut attachment positions on the bottom wall 12 of the fuel tank body 20 are covered from the vehicle lower side by the brace 122A and the tank bands 110A and 110B, so overall the fuel tank 10 made of resin is prevented or restrained from sustaining damage.

In this way, the tank bands 110A and 110B made of metal or the brace 122A made of metal are disposed at the vehicle lower sides of all the attachment portions 30A to 40B (the struts 34A to 44B) of the fuel tank 10, so the struts 34A to 44B can be disposed in the first storage portion 24 and the second storage portion 26 while restraining damage to the fuel tank 10 caused by interference with the road surface (the input of loads from the road surface).

Because of this, in the saddle fuel tank 10 molded of resin in which the distance between the upper wall 18 and the bottom wall 12 is large, deformation, which is caused, for example, by changes in an outside air temperature, of the first storage portion 24 and the second storage portion 26 can be restrained. Furthermore, by disposing the standoffs 62A to 62C in the coupling portion 28 in which the distance between the upper wall 18 and the bottom wall 12 is relatively small, deformation of the coupling portion 28 can be restrained.

In this way, in the fuel tank 10, by providing the standoffs 62A to 62C, which are easy to manufacture, in the coupling portion 28 where the distance between the bottom wall 12 and the upper wall 18 is relatively short, deformation of the fuel tank 10 can be restrained while restraining an increase in manufacturing costs and restraining a reduction in the capacity and an increase in the mass of the fuel tank 10. Furthermore, by disposing the struts 34A to 44B in the first storage portion 24 and the second storage portion 26 where the distance between the bottom wall 12 and the upper wall 18 is relatively long, deformation of the fuel tank 10 can be restrained while restraining a reduction in the capacity and an increase in the mass of the fuel tank 10.

It will be noted that it is not necessary for the attachment portions 30A to 40B (the struts 34A to 44B) to completely overlap (be covered by) the tank bands 110A and 11 0B and the braces 122A and 122B as seen from the vehicle lower side. The action described above can be achieved as a result of at least parts of the attachment portions 30A to 40B (the struts 34A to 44B) overlapping the tank bands 110A and 110B and the braces 122A and 122B.

It will be noted that although the structure for mounting a fuel tank to a vehicle of the present embodiment has a configuration that the heat insulator 100 is interposed between the fuel tank 10 and the tank bands 110A and 110B. Further, the tank bands 110A and 110B are housed in the channel portions 106A and 106B of the heat insulator 100. The structure is not limited to this. The structure may also have a configuration that channel portions that project in the vehicle upward direction are formed in the first bottom wall portion 12A and the second bottom wall portion 12B of the fuel tank 10 and that the tank bands 110A and 1108 are wound in the channel portions. In this case also, it is possible for attachment portions formed projecting in the vehicle upward direction from the channel portions to be formed.

Furthermore, in the fuel tank 10 of the present embodiment, the attachment portions 30A to 40B are formed projecting in the vehicle upward direction from the first bottom wall portion 12A and the second bottom wall portion 12B, but the attachment portions 30A to 40B are not limited to this. That is, the attachment portions 30A to 40B may also lie in the same plane as the first bottom wall portion 12A and the second bottom wall portion 12B.

Moreover, which of the attachment portions 30A to 40B are positioned on the vehicle upper sides of the tank bands 110A and 110B and which of the attachment portions 30A to 40B are positioned on the vehicle upper sides of the braces 122A and 122B is not particularly limited. For example, all the attachment portions 30A to 40B may be positioned on the vehicle upper sides of the tank bands 110A and 110B, or all the attachment portions 30A to 40B may be positioned on the vehicle upper sides of the braces 122A and 122B.

Furthermore, in the structure for mounting a fuel tank to a vehicle of the present embodiment, the braces 122A and 122B that intercouple the cross members are disposed on the vehicle lower side of the fuel tank 10, but the braces are not limited to this. The braces may also intercouple other vehicle frame members, and it suffices for them to be reinforcement members made of metal that intercouple structural members other than vehicle frame members.

## Claims

1. A structure for mounting a fuel tank (10) to a vehicle, comprising:
a fuel tank (10) having:
a fuel tank body (20) that is enclosed by a bottom wall (12), side walls (14, 16), and an upper wall (18), and
a strut (34A, 44A, 34B, 44B) that interconnects, inside the fuel tank (10), the bottom wall (12) and the upper wall (18);
a tank band (110A, 110B) disposed at a lower side of the fuel tank (10) and supporting the fuel tank (10); and
a reinforcement member (122A, 122B) disposed at the lower side of the fuel tank (10),
wherein:
the strut (34A, 44A, 34B, 44B) is attached to the bottom wall (12) at a strut attachment portion (30A, 40A, 30B, 40B) formed at the bottom wall (12), and
at least one of the tank band (110A, 110B) and the reinforcement member (122A, 122B) is positioned at a vehicle lower side of the strut attachment portion (30A, 40A, 30B, 40B) and the at least one of the tank band (110A, 110B) and the reinforcement member (122A, 122B) overlaps at least part of the strut attachment portion (30A, 40A, 30B, 40B).

2. The structure for mounting a fuel tank (10) to a vehicle according to claim 1, wherein the strut attachment portion (30A, 40A, 30B, 40B) is formed projecting in a vehicle upward direction at the bottom wall (12).

3. The structure for mounting a fuel tank (10) to a vehicle according to claim 1 or 2, wherein:
the fuel tank body (20) has a first storage portion (24), a second storage portion (26), and a coupling portion (28) that communicates the first storage portion (24) and the second storage portion (26) to each other, and the coupling portion (28) straddles an exhaust pipe (20) disposed at a vehicle lower side of the coupling portion (28) and extending in a vehicle front-rear direction, and
the strut (34A, 44A, 34B, 44B) is formed at at least one of the first storage portion (24) and the second storage portion (26).

4. The structure for mounting a fuel tank (10) to a vehicle according to claim 3, wherein:
a plurality of the struts (34A, 44A, 34B, 44B) are formed at the first storage portion (24) and at the second storage portion (26),
the plurality of the struts (34A, 34B) at the first storage portion (24) are formed out of alignment with each other in the vehicle front-rear direction and out of alignment with each other in a vehicle width direction, and
the plurality of the struts (44A, 44B) at the second storage portion (26) are formed out of alignment with each other in the vehicle front-rear direction and out of alignment with each other in the vehicle width direction.

5. The structure for mounting a fuel tank (10) to a vehicle according to claim 1, wherein the strut attachment portion (30A, 40A, 30B, 40B) and the tank band (110A, 1108) are separated from each other in a vehicle up-down direction, and the strut attachment portion (30A, 40A, 30B, 40B) and the reinforcement member (122A, 122B) are separated from each other in the vehicle up-down direction.
